Europäisches Patentamt

European Patent Office

Office européen des brevets

(11) Numéro de publication: **0 238 412 B1**

# (12) FASCICULE DE BREVET EUROPÉEN

(45) Date de publication de fascicule du brevet:
10.07.91

(51) Int. Cl.⁵: **F16L 41/04**, F16L 45/00

(21) Numéro de dépôt: 87400596.0

(22) Date de dépôt: **17.03.87**

(54) **Procédé et dispositif d'intervention sur une conduite de gaz maintenue en exploitation.**

(30) Priorité: **18.03.86 FR 8603814**

(43) Date de publication de la demande:
**23.09.87 Bulletin 87/39**

(45) Mention de la délivrance du brevet:
**10.07.91 Bulletin 91/28**

(84) Etats contractants désignés:
**AT BE CH DE ES FR GB GR IT LI LU NL SE**

(56) Documents cités:
BE-A- 754 921    GB-A- 1 366 521
US-A- 2 881 010    US-A- 2 949 276
US-A- 3 094 998    US-A- 3 503 407
US-A- 3 703 909

(73) Titulaire: **SOLLAC**
**Immeuble Elysées, La Défense 29 Le Parvis**
**F-92800 PUTEAUX(FR)**

(72) Inventeur: **Carpentier, Jean**
**473 Rue Angellier**
**F-59240 Dunkerque(FR)**

(74) Mandataire: **Polus, Camille et al**
**c/o Cabinet Lavoix 2, Place d'Estienne d'Or-**
**ves**
**F-75441 Paris Cedex 09(FR)**

## Description

La présente invention est relative à un procédé d'intervention sur une conduite de gaz maintenue en exploitation dans un réseau de distribution en vue d'en assurer notamment le nettoyage. L'invention est également relative à un dispositif pour la mise en oeuvre de ce procédé.

Un réseau de distribution de gaz est généralement constitué par des conduites de grand diamètre et de grande longueur permettant la livraison de gaz aux consommateurs situés le long de ce réseau.

Dans certaines installations, le gaz distribué peut être du gaz produit à partir d'une cokerie, et le réseau de distribution est utilisé par exemple pour alimenter une centrale thermique et des hauts-fourneaux qui, bien entendu, nécessitent une fourniture continue de gaz pour ne pas interrompre le fonctionnement.

Or, on sait que le gaz de cokerie contient une proportion importante de poussières qui forment à la longue des dépôts dans les conduites du réseau de distribution. Ces dépôts réduisent progressivement les possibilités de livraison de gaz aux consommateurs situés le long de ce réseau étant données les pertes de charge qu'ils provoquent.

Par ailleurs, ces dépôts occasionnent une surcharge importante du fait de leur poids qui pourrait mettre en péril la tenue mécanique des conduites.

Pour éviter une rupture éventuelle des conduites, et rétablir une distribution normale du gaz, il faut donc procéder périodiquement au nettoyage desdites conduites et à l'évacuation des dépôts accumulés, sans arrêter la fourniture du gaz.

Les conduites d'un réseau de distribution de gaz sont constituées par des tronçons soudés Les uns à la suite des autres pour former une conduite principale continue de grande Longueur, pouvant atteindre plusieurs kilomètres, si bien qu'il n'existe jusqu'à présent aucune possibilité permettant d'intervenir à l'intérieur des conduites pour en assurer notamment le nettoyage, tout en maintenant Le réseau de distribution en exploitation.

On connaît dans le US-A-2 881 010 un dispositif d'intervention sur une conduite. Ce dispositif comporte un tuyau muni d'une pluralité d'ouvertures. sur chaque ouverture est monté un connecteur, formé par une plaque horizontale comportant une partie pleine et une partie percée d'un orifice relié à un tuyau. Le connecteur peut être déplacé par glissement entre les deux positions.

Mais ce dispositif ne permet pas d'intervenir à l'intérieur de la conduite, tout en maintenant le réseau en exploitation.

La présente invention a donc pour objet une installation qui permet, sans arrêter la distribution du gaz, la mise en oeuvre d'un procédé d'intervention qui conserve les étanchéités nécessaires vis-à-vis du gaz sous pression tant au passage du système d'intervention qu'au niveau de l'évacuation des dépôts.

Suivant l'invention :

- on soude sur la partie inférieure de la conduite de gaz à des emplacements déterminés et régulièrement espacés un boîtier à tiroir comprenant d'une part, un support formé par une plaque horizon-tale percée d'un orifice central et destinée à adapter un ensemble de perçage pour aménager une ouverture dans la conduite de gaz puis un ensemble de nettoyage de ladite conduite et, d'autre part, un opercule coulissant formé par une plaque comportant une partie pleine, pouvant obstruer l'orifice central et une partie percée d'un orifice pouvant être placé en vis-à-vis de l'orifice central pour l'ouverture,
- on fixe sur le boîtier à tiroir par l'intermédiaire de moyens de manoeuvre rapide l'ensemble de perçage comprenant un trépan,
- on actionne le trépan pour percer une ouverture dans la conduite de gaz,
- on ferme l'opercule coulissant après avoir déverrouillé momentanément les moyens de manoeuvre rapide, puis on verrouille de nouveau lesdits moyens de manoeuvre rapide,
- on fixe l'opercule coulissant en position fermée,
- on procède au démontage de l'ensemble de perçage et on renouvelle cette opération de perçage à chaque emplacement où des boîtiers à tiroir ont été montés sur ladite conduite,
- on fixe sur le boîtier à tiroir, également par l'intermédiaire de moyens de manoeuvre rapide un ensemble de nettoyage,
- on ouvre l'opercule coulissant après avoir déverrouillé momentanément les moyens de manoeuvre rapide, puis on verrouille de nouveau lesdits moyens de manoeuvre rapide,
- on visse en position ouverte l'opercule coulissant,
- on introduit dans la conduite de gaz un système de nettoyage,
- on procède au nettoyage de ladite conduite de gaz en récupérant les dépôts ainsi évacués,
- on ferme l'opercule coulissant après avoir deverrouillé momentanément les moyens de manoeuvre rapide, puis on verrouille de nouveau lesdits moyens de manoeuvre rapide,
- on visse en position fermée l'opercule coulissant,
- puis on procède au démontage de l'ensemble de nettoyage,
- et enfin, on renouvelle cette opération de nettoyage à chaque emplacement où des boîtiers à tiroir ont été montés sur la conduite de gaz de façon à effectuer le nettoyage sur l'ensemble de ladite conduite du réseau de distribution.

L'invention est également relative à une installation d'intervention sur une conduite de gaz maintenue en exploitation, telle que définie à la revendication 2.

D'autres caractéristiques et avantages de l'invention ressortiront de la description qui va suivre, donnée à titre d'exemple non limitatif et en regard des dessins annexés sur lesquels :

- la figure 1 est une vue en coupe longitudinale d'une conduite de gaz munie à sa partie inférieure d'un boîtier à tiroir,
- la figure 2 est une vue en coupe transversale selon le plan II-II de la figure 1,
- la figure 3 est une vue en perspective du tiroir du boîtier,
- la figure 4 est une vue en coupe longitudinale de la conduite de gaz avec le boîtier à tiroir sur lequel est fixé un ensemble de perçage de ladite conduite de gaz,
- la figure 5 est une vue en coupe transversale selon le plan V-V de la figure 4,
- la figure 6 est une vue en perspective de l'ensemble de perçage,
- la figure 7 est une vue en coupe longitudinale de la conduite de gaz avec le boîtier à tiroir sur lequel est fixé un ensemble de nettoyage et de récupération des dépôts retirés de ladite conduite de gaz.

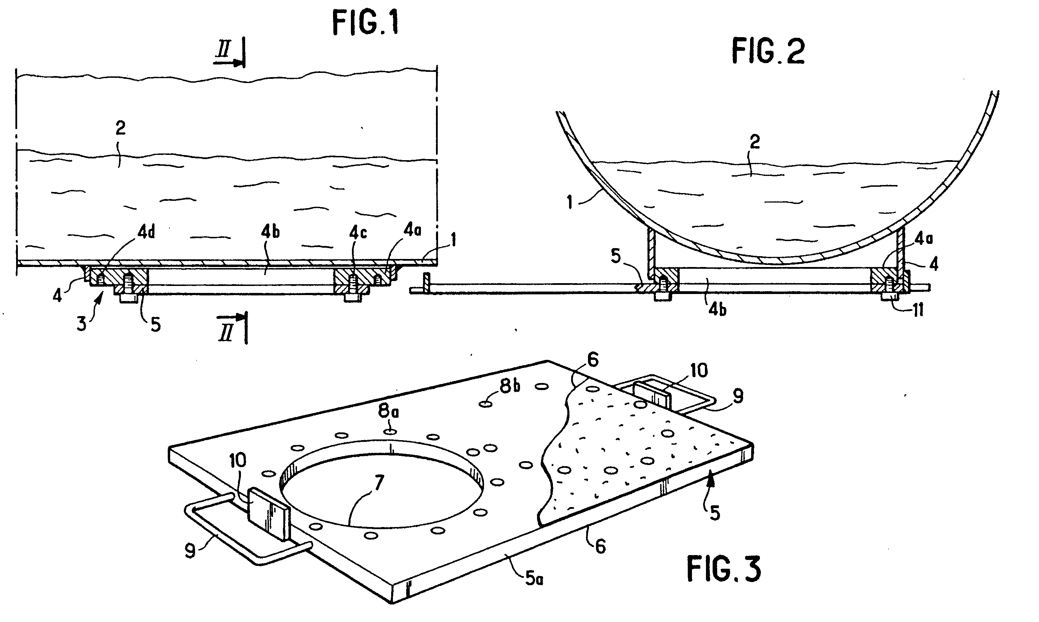

Sur la figure 1, on a représenté schématiquement une conduite 1 d'un réseau de distribution de gaz aux consommateurs situés le long de ce réseau. Cette conduite 1 contient des dépôts 2 qui se sont accumulés à la longue et qui réduisent ainsi progressivement les possibilités de livraison de gaz, ce qui nécessite un nettoyage de l'ensemble du réseau tout en le maintenant en exploitation de façon à ne pas perturber la fourniture de gaz pendant cette intervention.

Pour cela, il est nécessaire de percer des orifices dans la conduite à intervalles réguliers pour d'une part introduire dans ladite conduite un organe de nettoyage et d'autre part évacuer les dépôts en conservant les étanchéités nécessaires vis-à-vis du gaz sous pression.

A cet effet, on soude sur la partie inférieure de la conduite 1, à des emplacements déterminés régulièrement espacés, un boîtier à tiroir 3 formé par un support 4 soudé sur ladite conduite et par un opercule coulissant 5 (figures 1 et 2). Ce support 4 comprend une plaque horizontale 4a percée d'un orifice central 4b et comportant autour de cet orifice des petits trous filetés 4c pour la fixation de l'opercule 5. La plaque 4a comporte également deux rangées de petits trous filetés 4d pour la fixation d'autres éléments, comme on le verra ultérieurement.

L'opercule 5 est formé par une plaque 5a comportant sur ses faces supérieure et inférieure un joint 6. Cet opercule permet, selon sa position, d'ouvrir ou de fermer l'orifice 4b du support 4. A cet effet, la plaque 5a formant l'opercule 5 est divisée en deux parties, une partie pleine et une partie percée d'un orifice 7 dont le diamètre est égal au diamètre de l'orifice 4b du support 4.

Par ailleurs, la plaque 5a comporte des petits trous lisses 8a et 8b, d'une part dans sa partie pleine et d'autre part autour de l'orifice 7, répartis selon un cercle et de manière identique aux petits trous filetés 4c du support 4 de façon à pouvoir fixer l'opercule 5 soit dans la position ouverte ou soit dans la position fermée. Enfin, l'opercule 5 comporte dans le sens de coulissement sur chacune de ses faces latérales opposées, une poignée 9 et une butée de fin de course 10.

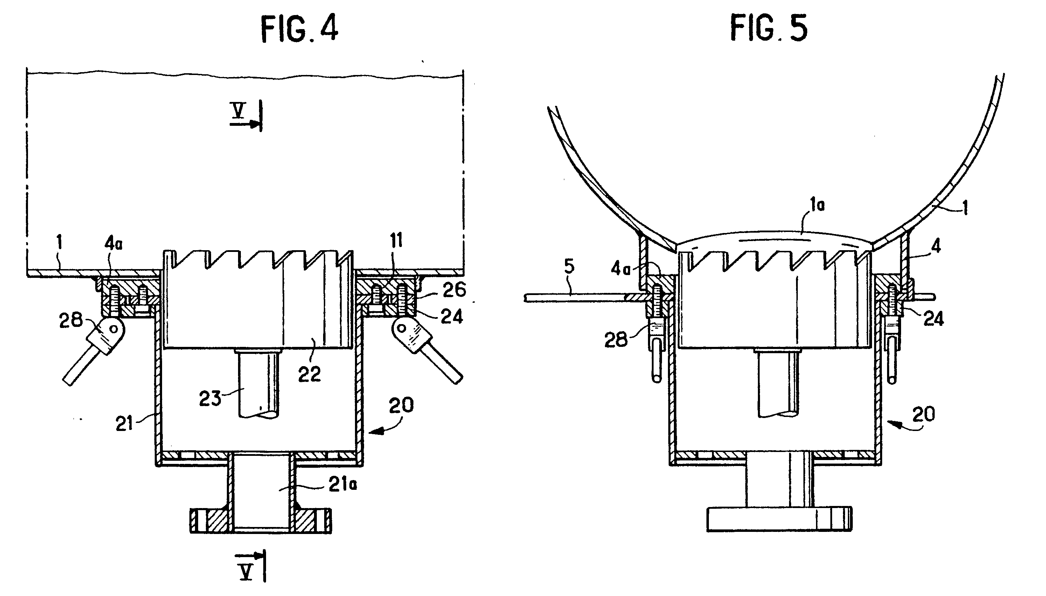

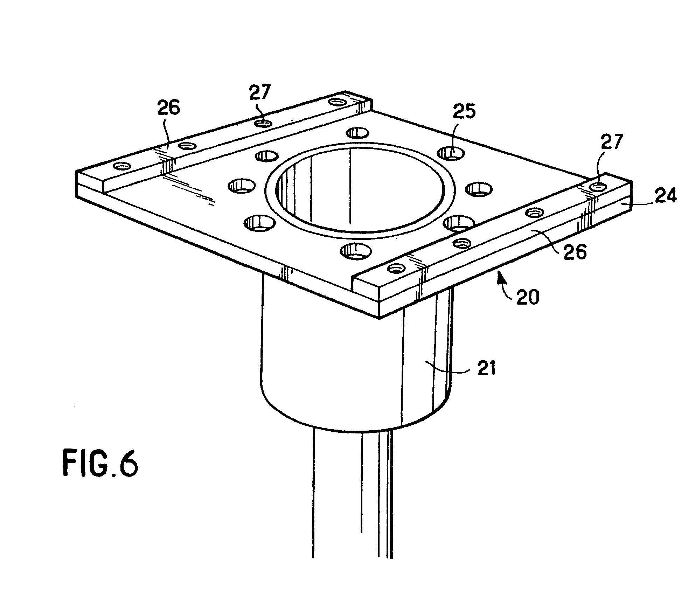

Après avoir soudé le boîtier à tiroir 3 sur la partie inférieure de la conduite 1 et fixé l'opercule 5 en position ouverte, par des vis 11, on monte sur ledit boîtier un ensemble de perçage 20 comme représenté sur les figures 4, 5 et 6.

Cet ensemble de perçage 20 se compose d'un tube 21 à l'intérieur duquel est placé un trépan 22 dont l'arbre de commande 23 traverse le fond du tube 21 par un orifice 21a et est relié à une perceuse non représentée.

A la partie supérieure du tube 21 est fixée une bride 24 entourant ledit tube 21 et qui comporte autour du tube des trous 25 répartis selon un cercle de manière identique aux petits trous 8a ou 8b de l'opercule 5 et dont le diamètre est déterminé pour permettre le passage des têtes de vis 11 de fixation de l'opercule 5.

Sur deux bords latéraux de la bride 24 est soudé un adaptateur 26 formé par une petite plaque dont l'épaisseur est sensiblement égale à l'épaisseur de l'opercule 5 du boîtier à tiroir 3. Ces deux adaptateurs sont disposés parallèlement au sens de déplacement de l'opercule 5 pour former avec la bride 24 une rainure dans laquelle peut se déplacer l'opercule 5.

La bride 24 et les adaptateurs 26 sont percés de petits trous lisses 27 pour la fixation de l'ensemble de perçage 20 sur le support 4.

L'opercule 5 étant fixe en position ouverte, on place l'ensemble de perçage 20 au-dessous du boîtier à tiroir 3 de telle manière que les têtes des vis 11 de fixation pénètrent dans les trous 25 de la bride 24. La face supérieure de la bride 24 s'applique sur l'opercule 5 et la face supérieure de chaque adaptateur 26 s'applique sur le support 4 du boîtier à tiroir 3.

La fixation de l'ensemble de perçage 20 sur le support 4 est réalisée par des vis de blocage rapide 28 par exemple des manetons excentriques. Les tiges filetées de ces manetons 28 traversent les trous lisses 27 de la bride 24 et des adaptateurs 26, et sont vissées dans les trous filetés 4d du support 4.

Après avoir fixé l'ensemble de perçage 20 et verrouillé les manetons 28, on actionne le trépan 22 qui passe à travers les orifices 7 et 4b respectivement de l'opercule 5 et du support 4, et qui perce une ouverture 1a dans la conduite 1, l'étanchéité étant assurée par les joints 6 prévus sur les faces de l'opercule 5.

Le disque découpé dans la conduite 1 est récupéré dans le tube 21 de l'ensemble de perçage 20.

Une fois que l'ouverture 1a dans la conduite 1 est réalisée, on dévisse les vis 11 de fixation de l'opercule 5, on déverrouille les manetons 28, on fait coulisser l'opercule 5 pour l'amener en position fermée, et on verrouille de nouveau les manetons excentriques 28. Il se produit pendant cette phase, une légère fuite de gaz qui est minime compte tenu de la rapidité de manoeuvre de l'opercule 5 et des manetons 28.

Ensuite, on visse l'opercule 5 en position fermée sur le support 4 grâce vis 11, ce qui permet le démontage de l'ensemble de perçage 20, étant donné que l'ouverture 1a pratiquée dans la conduite 1 est fermée par ledit opercule 5.

Cette opération de perçage peut être renouvelée à chaque emplacement où des boîtiers à tiroir ont été soudés sur la condutie 1 de façon à pouvoir intervenir dans l'ensemble du réseau de distribution.

Lorsque les différentes ouvertures d'intervention ont été réalisées sur la conduite 1, l'opération de nettoyage proprement dite peut débuter.

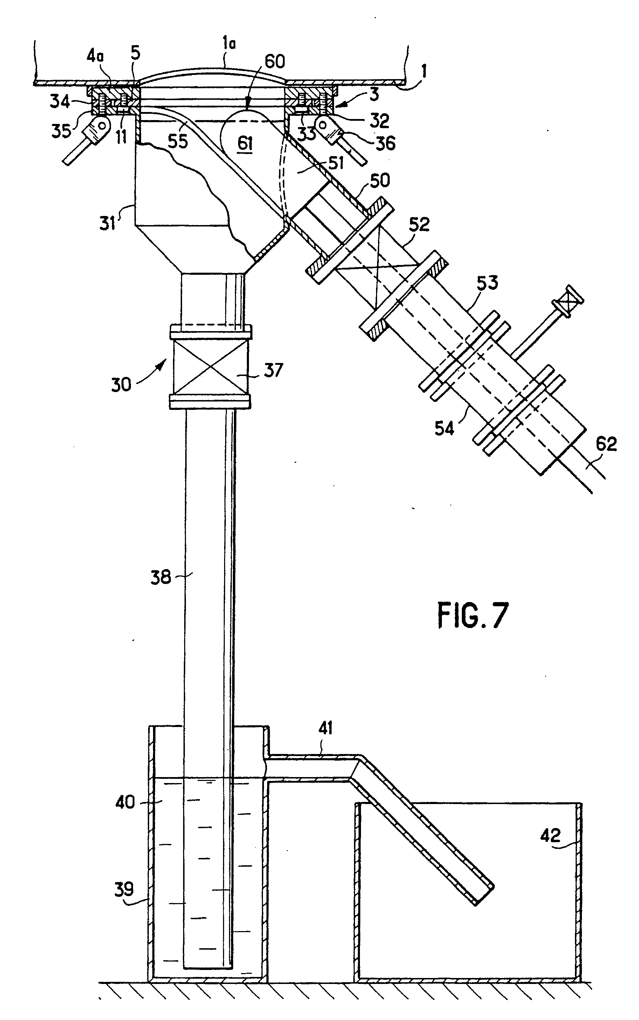

Pour réaliser cette opération, on place donc au-dessous du boîtier à tiroir un ensemble 30 de nettoyage et de récupération des dépôts (figure 7).

Cet ensemble de nettoyage 30 se compose d'un fût cylindrique 31 comportant à sa partie supérieure des moyens d'adaptation et de fixation dudit ensemble sur le support 4 du boîtier 3, qui sont identiques à ceux prévus à la partie supérieure de l'ensemble de perçage 20.

A la partie supérieure du fût 31 est donc prévue une bride 32 qui comporte autour dudit fût des trous 33 pour le passage des têtes de vis 11 de fixation de l'opercule 5. Sur deux bords latéraux de la bride 32 est également soudé un adaptateur 34 dont l'épaisseur est sensiblement égale à l'épaisseur de l'opercule 5 de façon à former avec la bride 32 une rainure dans laquelle peut se déplacer l'opercule 5. Le fût 31 est monté libre en rotation dans la bride 32.

La bride 32 et les adaptateurs 34 sont percés de petits trous lisses 35 pour la fixation de l'ensemble de nettoyage 30 sur le support 4. Cette fixation est obtenue par des vis de blocage rapide 36 par exemple des manetons excentriques. Les tiges filetées de ces manetons traversent les trous lisses 35 de la bride 32 et des adaptateurs 34, et sont vissées dans les trous filetés 4d du support 4.

La partie inférieure du fût 31 est raccordée par l'intermédiaire d'une vanne 37 à une tubulure d'écoulement 38 dont l'extrémité libre est placée dans un bac 39 muni d'une garde hydraulique 40 pour assurer un équilibrage des pressions et l'étanchéité.

Au-dessus du niveau de la garde hydraulique 40, le bac 39 comporte un tube 41 pour déverser l'excès de liquide dans un réservoir de récupération 42.

Sur la paroi latérale du fût 31 est fixée une manchette 50 communiquant avec l'intérieur dudit fût par un orifice 51 et dont l'axe est incliné par rapport à l'axe vertical du fût 31. Cette manchette 50 est raccordée par l'intermédiaire d'un sas 52 à une canalisation 53 d'introduction d'un système de nettoyage hydrodynamique désigné dans son ensemble par la référence 60. La canalisation 53 comporte un dispositif d'étanchéité 54 constitué par un presse-étoupe.

Une rampe de guidage 55 est prévue à l'intérieur du fût 31 dans le prolongement de la manchette 50 pour diriger le système de nettoyage 60 dans la conduite 1.

Ce système de nettoyage 60 se compose d'une tête 61 en forme d'obus munie sur sa périphérie de buses de projection qui assurent le nettoyage et le déplacement autonome du système à l'intérieur de la conduite de gaz 1. La tête 61 est reliée à un flexible 62 d'alimentation en fluide sous pression.

Après avoir fixé l'ensemble de nettoyage 30 sur le support 4 du boîtier à tiroir 3 par l'intermédiaire des manetons excentriques 36, on dévisse les vis 11 de fixation de l'opercule 5, on déverrouille les manetons 36 et on fait coulisser l'opercule 5 pour l'amener en position ouverte. Dès que l'opercule est arrivé dans cette position, on verrouille à nouveau les manetons 36 et l'opération de nettoyage peut débuter.

L'étanchéité nécessaire vis-à-vis du gaz sous pression est assurée par les joints 6 prévus sur les faces de l'opercule 5, par la garde hydraulique 40 dans le bac 39 et par le presse-étoupe 54.

Ensuite, on introduit la tête 61 du système de nettoyage hydrodynamique dans la canalisation 53. La tête 61 avec son flexible 62 traverse le presse-étoupe 54, le sas 52 et est guidée dans la conduite 1 par la rampe 55. Cette tête 61 pénètre donc à l'intérieur de la conduite 1 par l'ouverture 1a et assure le nettoyage par exemple de la partie de la conduite 1 située à gauche de l'ouverture 1a. La projection de l'eau sous pression par la tête 61 décolle les dépôts de la paroi de la conduite, qui s'écoulent par l'ouverture 1a dans le fût 31, puis dans le bac 39 par l'intermédiaire de la tubulure 38, l'excès du liquide étant récupéré dans le réservoir 42.

Dès que le nettoyage de la partie gauche de la conduite 1 est terminé, on ramène la tête de nettoyage 61 dans la manchette 50. Ensuite, on fait pivoter l'ensemble de nettoyage 30 de 180° de façon à orienter la tête 61 vers la partie droite de la conduite et assurer le nettoyage de cette zone.

Une fois que le nettoyage de cette partie de la conduite est terminé, on ramène à nouveau la tête de nettoyage 61 dans la manchette et on obture l'ouverture 1a en fermant l'opercule 5.

Ensuite, on procède au démontage de l'ensemble de nettoyage 30 et on renouvelle l'opération à chaque emplacement où des boîtiers à tiroir ont été montés sur la conduite afin de nettoyer la conduite de gaz 1 sur toute sa longueur.

Le boîtier à tiroir permet donc la pose et la dépose d'une part de l'ensemble de perçage et d'autre part de l'ensemble de nettoyage ainsi que son orientation pour faciliter le déplacement du système de nettoyage.

On voit donc que ce dispositif permet, sans arrêter la distribution du gaz, la mise en oeuvre d'un procédé de nettoyage hydrodynamique qui conserve les étanchéités nécessaires vis-à-vis du gaz sous pression tant au passage du système de nettoyage qu'au niveau de l'évacuation des dépôts.

L'ensemble 30 peut également être utilisé pour différentes interventions dans la conduite 1 et notamment l'introduction d'une caméra pour inspecter l'intérieur de ladite conduite.

## Revendications

1. Procédé d'intervention sur une conduite de gaz maintenue en exploitation dans un réseau de distribution en vue d'en assurer notamment le nettoyage en conservant les étanchéités nécessaires vis-à-vis du gaz sous pression, dans lequel :
   - on soude sur la partie inférieure de la conduite de gaz (1) à des emplacements déterminés et régulièrement espacés un boîtier à tiroir (3) comprenant d'une part un support (4) formé par une plaque horizontale (4a) percée d'un orifice central (5b) et destinée à adapter un ensemble de perçage (2) pour aménager une ouverture (1a) dans la conduite de gaz puis un ensemble de nettoyage (30) de ladite conduite et d'autre part, un opercule coulissant (5), formé par une plaque (5a) comportant une partie pleine, pouvant obstruer l'orifice central (4b) et une partie percée d'un orifice (7) pouvant être placé en vis à vis de l'orifice central (4b) pour l'ouverture,
   - on fixe sur le boîtier à tiroir (3), par l'intermédiaire de moyens de manoeuvre rapide (28) l'ensemble de perçage (20) comprenant un trépan (22),
   - on actionne le trépan (22) pour percer une ouverture (1a) dans la conduite de gaz (1),
   - on ferme l'opercule coulissant (5) après avoir déverrouillé momentanément les moyens de manoeuvre rapide, puis on verrouille de nouveau lesdits moyens de manoeuvre rapide,
   - on fixe l'opercule coulissant (5) en position fermée,
   - on procède au démontage de l'ensemble de perçage (20) et on renouvelle cette opération de perçage à chaque emplacement où des boîtiers à tiroir (3) ont été soudés sur ladite conduite (1),
   - on fixe sur le boîtier à tiroir (3), également par l'intermédiaire de moyens de manoeuvre rapide (36) l'ensemble de nettoyage (30),
   - on ouvre l'opercule coulissant (5) après avoir déverrouillé momentanément les moyens de manoeuvre rapide (36), puis on verrouille à nouveau lesdits moyens de manoeuvre rapide,
   - on visse en position ouverte l'opercule coulissant (5),
   - on introduit dans la conduite de gaz (1) un système de nettoyage (60),
   - on procède au nettoyage de ladite conduite de gaz (1) en récupérant les dépôts ainsi évacués,
   - on ferme l'opercule coulissant (5) après avoir déverrouillé momentanément les moyens de manoeuvre rapide (36), puis on verrouille de nouveau lesdits moyens de manoeuvre rapide,
   - on visse en position fermée l'opercule coulissant (5),
   - puis on procède au démontage de l'ensemble de nettoyage (30),
   - et enfin, on renouvelle cette opération de nettoyage à chaque emplacement où des boîtiers à tiroir (3) ont été soudés sur la conduite de gaz (1) de façon à effectuer le nettoyage sur l'ensemble de ladite conduite du réseau de distribution.

2. Installation d'intervention sur une conduite de gaz maintenue en exploitation dans un réseau de distribution en vue d'en assurer notamment le nettoyage en conservant les étanchéités nécessaires vis-à-vis du gaz sous pression, comportant un boîtier à tiroir (3) fixé sur la partie inférieure de la conduite de gaz (1) à des emplacements déterminés et régulièrement espacés et comprenant d'une part, un support (4) soudé sur la conduite (1) et formé par une plaque horizontale (4a) percée d'un orifice central (4b) et, d'autre part, un opercule coulissant (5) formé par une plaque (5a) comportant sur ses faces supérieure et inférieure un joint (6) et une partie pleine et une partie percée d'un orifice (7) dont le diamètre est égal au diamètre de l'orifice central (4b) dudit support (4), ladite plaque horizontale (4a) comportant autour de l'orifice central (4b) des petits trous filetés (4c) pour la fixation de l'opercule (5) et au moins deux rangées de petits trous fiLetés (4d) pour la fixation d'un ensemble de perçage (20) constitué par un tube (21) comportant à sa partie supérieure des moyens d'adaptation (24, 26) et de fixation (28) dudit ensemble sur le support (4) ou pour la fixation d'un ensemble de nettoyage (30) constitué par un fût cylindrique (31) comportant à sa partie supérieure des moyens d'adaptation (32, 34) et de fixation (36) sur ledit support (4) et chaque partie de la plaque (5a) de l'opercule (5) étant muni de petits trous lisses respectivement (8a) et (8b) répartis de façon analogue aux petits trous filetés du support (4) pour la fixation dudit opercule (5) soit dans une position ouverte, soit dans une position fermée.

3. Installation selon la revendication 2, caractérisée en ce qu'un trépan (22) relié à une perceuse est disposé dans le tube (21) de l'ensemble de perçage (20).

4. Installation selon la revendication 2, caractérisée en ce que les moyens d'adaptation de l'ensemble de perçage sont formés par une bride (24) comportant sur deux bords latéraux un adaptateur (26) constitué par une petite plaque dont l'épaisseur est sensiblement égale à l'épaisseur de l'opercule (5) de façon à former avec la bride (24) une rainure de guidage pour le déplacement dudit opercule.

5. Installation selon les revendications 2 et 4, caractérisée en ce que les moyens de fixation de l'ensemble de perçage (20) sont constitués par des vis de blocage rapide (28) par exemple des manetons excentriques dont les tiges filetées traversent la bride (24) et les adaptateurs (26) par des trous lisses (27) et sont vissées dans les trous filetés (4d) du support (4) du boîtier à tiroir (3).

6. Installation selon la revendication 2, caractérisée en ce que les moyens d'adaptation de l'ensemble de nettoyage sont formés par une bride (32) comportant sur deux bords latéraux un adaptateur (34) constitué par une petite plaque dont l'épaisseur est sensiblement égale à l'épaisseur de l'opercule (5) de façon à former avec la bride (32) une rainure de guidage pour le déplacement dudit opercule.

7. Installation selon les revendications 2 et 6, caractérisée en ce que les moyens de fixation de l'ensemble de nettoyage (30) sont constitués par des vis de blocage rapide (36) par exemple des manetons excentriques dont les tiges filetées traversent la bride (32) et les adaptateurs (34) par des trous lisses (35) et sont vissées dans les trous filetés (4d) de support (4) du boîtier à tiroir (3).

8. Installation selon les revendications 2 et 6, caractérisée en ce que le fût cylindrique (31) est monté libre en rotation à l'intérieur de la bride (32).

9. Installation selon les revendications 2 et 8, caractérisée en ce que la partie inférieure du fût (31) est raccordée par l'intermédiaire d'une vanne (37) à une tubulure d'écoulement (38) dont l'extrémité libre est placée dans un bac de récupération (39) muni d'une garde hydraulique (40) pour assurer un équilibre des pressions et l'étanchéité vis-à-vis de la conduite de gaz (1).

10. Installation selon la revendication 2, caractérisée en ce que l'ensemble de nettoyage comporte des moyens pour introduire à l'intérieur de la conduite de gaz (1) un système de nettoyage hydrodynamique (40).

11. Installation selon la revendication 10, caractérisée en ce que les moyens d'introduction à l'intérieur de la conduite de gaz (1) du système de nettoyage (60) sont constitués par une manchette (50) fixée sur la paroi latérale du fût (31) selon un axe incliné par rapport à l'axe vertical dudit fût (31), ladite manchette étant prolongée à l'intérieur du fût (31) par une rampe de guidage (55) dirigée vers l'ouverture (1a) de la conduite de gaz (1).

12. Installation selon la revendication 11, caractérisée en ce que la manchette (50) est prolongée par une canalisation (52) pour l'introduction du système de nettoyage (60), ladite canalisation étant munie d'un sas (52) et d'un dispositif d'étanchéité (54) formé par exemple par un presse-étoupe.

## Claims

1. Process for intervention on a gas pipe kept operating in a distribution network more particularly for cleaning purpose, whilst maintaining the necessary seals with respect to the pressurized gas, wherein in regularly space manner and at predetermined locations to the lower part of the gas pipe (1) is welded a valve case (3) having on the one hand a support (4) formed by a horizontal plate (4a) provided with a central orifice (5b) and suitable for a drilling means (2) for making an opening (1a) in the gas pipe, as well as a means (30 ) for cleaning the said pipe and on the other hand a sliding cover (5), formed by a plate (5a) having a solid part, which is able to block the central orifice (4b) and and at having an orifice (7), which can be positioned facing the central orifice (4b) for the opening, via fast manipulating means (28) to the valve case (3) is fixed the drilling means (20) incorporating a drilling bit (22), the latter is operated for making an opening (1a) in the gas pipe (1), the sliding cover (5) is closed after having instantaneously unlocked the fast manipulating means and then the latter are relocked, the sliding cover (5) is fixed in the closed position, the drilling means (20) is disassembled and the drilling operation is repeated at each location where the valve cases (3) have been welded to the said pipe (1), via fast manipulating means (36) the cleaning means (30) is fixed to the valve case (3), the sliding cover (5) is opened after having instantaneously unlocked the fast manipulating means (36), which are then relocked, the sliding cover (5) is screwed in the open position, into the gas pipe (1) is introduced a cleaning system (60), the gas pipe (1) is cleaned and the thus removed deposits are collected, the sliding cover (5) is closed after instantaneously unlocking the fast manipulating means (36), which are then relocked, the sliding cover (5) is screwed in the closed position, the cleaning means (30) are then dismantled and finally said cleaning operation is repeated at each location where the valve cases (3) have been welded to the gas pipe (1), so as to carry out the cleaning on the complete pipe of the distribution network.

2. Intervention installation on a gas pipe kept operating in a distribution network more particularly for cleaning purposes, whilst maintaining the necessary seals with respect to the pressurized gas comprising a valve case (3) fixed to the lower part of the gas pipe (1) at regularly spaced and clearly defined locations and incorporating on the one hand a support (4) welded to the pipe (1) and formed by a horizontal plate (4a) having a central orifice (4b) and on the other hand a sliding cover (5) formed by a plate (5a) provided on its upper and lower faces with a joint (6) and a solid part and a part perforated by an orifice (7), whose diameter is equal to the diameter of the central orifice (4b) of the said support (4), the horizontal plate (4a) having around the central orifice (4b) small tapholes (4c) for fixing the cover (5) and at least two rows of small tapholes (4d) for fixing a drilling means (20) constituted by a tube (21) provided in its upper part with means for adapting (24, 26) and fixing (28) the said means to the support (4) or for the fixing of a cleaning means (30) constituted by a cylindrical barrel (31) having in its upper part means for adapting (32, 34) and fixing (36) to the said support (4) and each part of the plate (5a) of the cover (5) is provided with small smooth holes (8a and 8b respectively) distributed in an identical manner to the small tapholes of the support (4 ) for fixing the said cover (5) either in the open position, or in the closed position.

3. Installation according to claim 2, characterized in that a drilling bit (22) connected to a drill is located in the tube (21) of the drilling means (20).

4. Installation according to claim 2, characterized in that the adapting means of the drilling means are formed by a flange (24), provided on its two lateral edges with an adapter (26) constituted by a small plate, whose thickness is substantially equal to the thickness of the cover (5), so as to form with the said flange (24) a guidance groove for the displacement of said cover.

5. Installation according to claims 2 and 4, characterized in that the means for fixing the drilling means (20) are constituted by fast locking screws (28), e.g. eccentric wrist-pins, whose threaded rods traverse the flange (24) and the adapters (26) by smooth holes (27) and are screwed in the tapholes (4d) of the support (4) of the valve case (3).

6. Installation according to claim 2, characterized in that the adapting means of the cleaning means are formed by a flange (32) having on two lateral edges an adapter (34) constituted by a small plate, whose thickness is substantially equal to the thickness of the cover (5), so as to form with the flange (32) a guidance groove for the displacement of said cover.

7. installation according to claims 2 and 6, characterized in that the means for fixing the cleaning means (30) are constituted by fast locking screws (36), e.g. eccentric wrist-pins, whose threaded rods traverse the flange (32) and the adapters (34) by smooth holes (35) and are screwed in the tapholes (4d) of the support (4) of the valve case (3).

8. Installation according to claims 2 and 6, characterized in that the cylindrical barrel (31) is mounted so as to rotate freely within the flange (32).

9. Installation according to claims 2 and 8, characterized in that the lower part of the barrel (31) is connected via a valve (37) to an outflow tube (38), whole free end is placed in a recovery tank (39) equipped with a hydraulic guard (40) in order to balance the pressures and provide a seal with respect to the gas pipe (1).

10. Installation according to claim 2, characterized in that the cleaning means incorporate means for introducing a hydrodynamic cleaning system (40) into the gas pipe (1).

11. Installation according to claim 10, characterized in that the means for introducing the cleaning system (60) into the gas pipe (1) are constituted by a sleeve (50) fixed to the side wall of the barrel (31) in accordance with an axis inclined with respect to the vertical axis of the said barrel (31), said sleeve being extended within the barrel (31) by a guide ramp (51) directed towards the opening (1a) of the gas pipe (1).

12. Installation according to claim 11, characterized in that the sleeve (50) is extended by a duct (52) for the introduction of the cleaning system (60), said duct being provided with a lock (52) and a sealing device (54), e.g. formed by a stuffing box.

## Ansprüche

1. Verfahren zum Ausführen von Arbeiten an einem in Betrieb befindlichen Gasrohr in einem Verteilernetz, um insbesondere die Reinigung sicherzustellen, unter Beibehalten der notwendigen Dichtheiten gegenüber dem unter Druck stehenden Gas, bei dem:

auf den unteren Bereich der Gasleitung (1) an vorbestimmten und regelmäßig beabstandeten Stellen ein Schiebegehäuse (3) angeschweißt wird, das einerseits eine Stütze (4), gebildet aus einer horizontalen Platte (4a), die mit einer Mittenöffnung (5b) versehen ist, und dazu bestimmt ist, eine Bohranordnung (2) anzupassen, um eine Öffnung (1a) in die Gasleitung sodann eine Reinigungsanordnung (30) des genannten Rohres einzubringen, und andererseits eine Gleitabdeckung (5) aufweist, die durch eine Platte (5a) gebildet wird, die einen Vollbereich aufweist, wobei sie die Zentralöffnung (4b) überdecken kann und einen mit einem Loch (7) versehenen Bereich aufweist, der gegenüber der Zentralöffnung (4b) für die Öffnung angeordnet werden kann,

auf dem Schiebegehäuse (3) mittels Schnellbetätigungseinrichtungen (28) die Bohranordnung (20), die einen Bohrer (22) aufweist, befestigt wird,

der Bohrer (22) betätigt wird, um eine Öffnung (1a) in die Gasleitung (1) einzubringen,

die Gleitabdeckung (5) geschlossen wird, nachdem die Schnellbetätigungseinrichtungen gleichzeitig gelöst wurden, sodann erneut die Schnellbetätigungseinrichtungen verriegelt werden,

die Gleitabdeckung (5) in ihrer geschlossenen Stellung festgelegt wird,

die Demontage der Bohranordnung (20) durchgeführt wird und dieser Bohrvorgang an jedem Ort erneuert wird, wo Schiebegehäuse (3) auf die Gasleitung (1) aufgeschweist wurden,

auf dem Schiebegehäuse (3) ebenfalls mittels der Schnellbetätigungseinrichtungen (36) die Reinigungsanordnung (30) befestigt wird,

die Gleitabdeckung (5) geöffnet wird, nachdem die Schnellbetätigungseinrichtungen (36) zeitweise entriegelt wurden, sodann erneut diese Schnellbetätigungseinrichtungen verriegelt werden,

in Öffnungsstellung die Gleitabdeckung (5) aufgeschraubt wird,

in die Gasleitung (1) ein Reinigungssystem (60) eingeführt wird,

die Reinigung der Gasleitung (1) vorgenommen wird unter Auffangen der so evakuierten Ablagerungen,

die Gleitabdeckung (5) geschlossen wird, nachdem die Schnellbetätigungseinrichtungen (36) zeitweise entriegelt wurden, sodann die genannten Schnellbetätigungseinrichtungen erneut verriegelt werden,

die Gleitabdeckung (5) in Schließstellung geschraubt wird,

sodann die Abnahme der Reinigungsanordnung (30) vorgenommen wird, und

schließlich dieser Reinigungsvorgang an jeder Stelle wiederholt wird, wo Schiebegehäuse (3) auf die Gasleitung (1) aufgeschweist wurden, derart, um die Reinigung über die Gesamtheit der Leitung des Verteilernetzes auszuführen.

2. Vorrichtung zum Ausführen von Arbeiten an einer in Betrieb befindlichen Gasleitung in einem Verteilernetz, um insbesondere die Reinigung sicherzustellen, unter Beibehaltung der notwendigen Dichtheiten gegenüber dem unter Druck stehenen Gas, mit einem Schiebegehäuse (3), das auf dem unteren Bereich der Gasleitung (1) an vorbestimmten und regelmäßig beabstandeten Stellen befestigt ist, und einerseits eine Stütze (4), die auf die Leitung (1) aufgeschweißt ist und durch eine horizontale Platte (4a) gebildet ist, die mit einer Zentralöffnung (4b) versehen ist, und andererseits eine Gleitabdeckung (5) aufweist, die durch eine Platte (5a) gebildet ist, die auf ihrer Ober- und Unterseite eine Dichtung (6) und einen Vollbereich und einen mit einer Öffnung (7) versehenen Bereich aufweist, deren Durchmesser gleich ist dem Durchmesser der Zentralöffnung (4b) der Stütze (4), wobei die horizontale Platte (4a) um die Zentralöffnung (4b) kleine Gewindelöcher (4c) aufweist für die Befestigung der Gleitabdeckung (5) und wenigstens zwei Reihen von kleinen Gewindelöchern (4) aufweist, für die Befestigung einer Bohrungsanordnung (20), die gebildet wird aus einem Rohr (21), das an seinem oberen Bereich Einrichtungen zum Einstellen (24, 26) und zum Befestigen (28) der genannten Anordnung auf der Stütze (4) oder für die Befestigung einer Reinigungsanordnung (30) aufweist, die durch einen zylindrischen Schaft (31) gebildet wird, der an seinem oberen Bereich Einrichtungen zum Anpassen (32, 34) und zum Festlegen (36) auf der Stütze (4) aufweist, und jeder Bereich der Platte (5a) der Gleitabdeckung (5) mit kleinen glatten Löchern (8a) bzw. (8b) versehen ist, die auf zu den Gewindelöchern der Stütze (4) analoge Weise für die Befestigung des Gleitschiebers (5) entweder in einer offenen oder in einer geschlossenen Stellung verteilt angeordnet sind.

3. Vorrichtung nach Anspruch 2, **dadurch gekennzeichnet,** daß ein Bohrer (22), der mit einer Bohrmaschine verbunden ist, in dem Rohr (21) der Bohranordnung (20) angeordnet ist.

4. Vorrichtung nach Anspruch 2, **dadurch gekennzeichnet,** daß die Einrichtungen zur Anpassung der Bohranordnung gebildet werden durch einen Flansch (24), der auf zwei Seitenrändern einen Adapter (26) aufweist, der aus einer Trennplatte gebildet ist, deren Dicke im wesentlichen gleich der Dicke der Gleitabdekkung (5) ist, derart, um mit dem Flansch (24) eine Führungsrinne für die Bewegung der Gleitabdeckung zu bilden.

5. Vorrichtung nach den Ansprüchen 2 und 4, **dadurch gekennzeichnet,** daß die Befestigungseinrichtungen der Bohranordnung (20) gebildet werden aus Schnellblockierschrauben (28), beispielsweise aus exzentrischen Zapfen, deren Gewindestangen den Flansch (24) und die Adapter (26) durch glatte Bohrungen (27) durchqueren und in die Gewindelöcher (4d) der Stütze (4) des Schiebehäuses (3) eingeschraubt sind.

6. Vorrichtung nach Anspruch 2, **dadurch gekennzeichnet,** daß die Anpassungseinrichtungen der Reinigungsanordnung durch einen Flansch (32) gebildet werden, der an zwei Seitenrändern einen Adapter (34) aufweist, der durch eine kleine Platte gebildet wird, deren Dicke im wesentlichen gleich der Dicke der Gleitabdeckung (5) ist, derart, um mit dem Flansch (32) eine Führungsrinne für die Bewegung der Gleitabdeckung zu bilden.

7. Vorrichtung nach den Ansprüchen 2 und 5, **dadurch gekennzeichnet,** daß die Befestigungseinrichtungen der Reinigungsanordnung (30) aus Schnellblockierschrauben (36), beispielsweise aus exzentrischen Zapfen gebildet sind, deren Gewindestangen den Flansch (32) und die Adapter (34) durch glatte Löcher (35) durchqueren, und in die Gewindelöcher (4d) der Stütze (4) des Schiebegehäuses (3) eingeschraubt sind.

8. Vorrichtung nach den Ansprüchen 2 und 6, **dadurch gekennzeichnet,** daß der zylindrische Schaft (31) drehbeweglich im Inneren des Flansches (32) angebracht ist.

9.  Vorrichtung nach Anspruch 2 oder 8, **dadurch gekennzeichnet**, daß der untere Bereich des Schaftes (31) mittels eines Ventils (37) mit einem Ablaßrohrstutzen (38) verbunden ist, dessen freies Ende in einen Aufnahmetrog (39) gesetzt ist, der mit einem Hydrauliküberwacher (40) versehen ist, um ein Druckgleichgewicht und die Dichtheit gegenüber der Gasleitung (1) sicherzustellen.

10.  Vorrichtung nach Anspruch 2, **dadurch gekennzeichnet**, daß die Reinigungsanordnung Einrichtungen zum Einführen in das Innere der Gasleitung (1) eines hydrodynamischen Reinigungssystems (40) aufweist.

11.  Vorrichtung nach Anspruch 10, **dadurch gekennzeichnet**, daß die Einrichtungen zum Einführen des Reinigungssystems (60) in das Innere der Gasleitung (1) durch eine Manschette (50) gebildet sind, die auf der seitlichen Trennwand des Schaftes (31) gemäß einer geneigten Achse bezüglich der Vertikalachse dieses Schaftes (31) befestigt sind, wobei die Manschette nach dem Inneren des Schaftes (31) durch eine Führungsrampe (55) verlängert wird, die auf die Öffnung (1a) der Gasleitung (1) gerichtet ist.

12.  Vorrichtung nach Anspruch 11, **dadurch gekennzeichnet**, daß die Manschette (50) zum Einführen des Reinigungssystems (60) durch eine Leitung (52) verlängert wird, zum Einführen des Reinigungssystems (60), wobei die Leitung mit einer Schleuse (52) und einer Dichtungsvorrichtung (54) versehen ist, die beispielsweise durch eine Stopfbüchse gebildet wird.

**FIG.1**

**FIG.2**

**FIG.3**

EP 0 238 412 B1

FIG. 5

FIG. 4

FIG.6

FIG.7